# EUROPEAN PATENT SPECIFICATION

(11) **EP 3 441 368 B1**
(45) Date of publication and mention of the grant of the patent: **07.07.2021**
(21) Application number: 17779036.7
(22) Date of filing: 30.03.2017
(51) Int. Cl.: C02F 1/44, B01D 65/08, B01D 71/56, C02F 1/70, C02F 1/76, C02F 5/08, C02F 5/10, C02F 5/12, C02F 5/14

(54) **WATER TREATMENT METHOD**
WASSERBEHANDLUNGSVERFAHREN
PROCÉDÉ DE TRAITEMENT DE L'EAU

(30) Priority: 08.04.2016 JP 2016077855; 29.08.2016 JP 2016166695
(43) Date of publication of application: 13.02.2019
(73) Proprietor: Toray Industries, Inc., Tokyo 103-8666 (JP)
(72) Inventor: MAEDA, Tomohiro, Otsu-shi Shiga 520-8558 (JP); TANIGUCHI, Masahide, Otsu-shi Shiga 520-8558 (JP); SAITO, Kenji, Otsu-shi Shiga 520-8558 (JP)
(74) Representative: Hoefer & Partner Patentanwälte mbB
(86) International application number: PCT/JP2017/013212
(87) International publication number: WO 2017/175657

(56) References cited:
- WO-A1-2012/093573
- JP-A- 2000 300 966
- JP-A- 2001 149 950
- JP-A- 2013 052 333
- JP-A- 2013 052 333
- JP-A- 2013 180 277
- US-A1- 2004 050 793
- US-A1- 2013 256 226

## Description

### TECHNICAL FIELD

The present invention relates to a water treatment method for obtaining permeate having a low solute concentration from raw water, such as seawater or river water, groundwater, lake water, or wastewater-treated water that contains a solute, e.g., a salt, using a semipermeable membrane module, and relates to a method for operating the device. More specifically, the present invention relates to a water treatment method which is for obtaining fresh water stably at low cost while inhibiting the semipermeable membrane module from suffering oxidative degradation.

### BACKGROUND ART

In recent years, shortages of water resources have come to be more serious, and exploitation of hitherto unutilized water resources has been studied. Among these studies, particular attention has been focused on the so-called seawater desalination, namely technologies for producing drinking water from seawater, which, though most familiar to beings, has been unusable without being treated, and on reuse technologies for purifying sewage or wastewater and converting the thus-treated wastewater into fresh water. The seawater desalination has so far been brought into actual use with a particular emphasis on thermal processes in the Middle East region, which is extremely poor in water resources and very rich in thermal resources attributable to petroleum, while seawater desalination using reverse osmosis technology which is high in energy efficiency has been adopted in heat source-poor regions other than the Middle East region.

However, recent advances of reverse osmosis technology have been pushing ahead with improvement in reliability and reduction in cost, and construction of seawater desalination plants adopting reverse osmosis technology has therefore been proceeding in the Middle East region, and is now showing an aspect of international diversification.

Reuse of sewage or wastewater is beginning to be applied to districts devoid of water sources, such as urban areas and industrial regions in inlands and along coasts, and regions in which discharge amount is limited because of severe effluent regulation. In island countries poor in water resources, notably Singapore, after treatment of sewage water generated within the country, the treated water is kept in reservoirs without being discharged into sea and regenerated to a level of drinkable water through the use of reverse osmosis membranes. In this way, water shortage has been addressed.

The reverse osmosis technology having been applied to desalination of seawater and reuse of sewage or wastewater allows production of solute-free water by applying pressure higher than osmosis pressure to water containing solutes such as salts, and forcing the water to pass through the semipermeable membranes. This technology makes it possible to obtain drinking water from seawater, brackish water, and water which contains harmful contaminants, and has been used for production of industrial ultrapure water, wastewater treatment, recovery of valuables, and so on.

Stable operations of a water treatment device utilizing reverse osmosis membranes require pretreatment appropriate to the quality of raw water taken in the device. Insufficient pretreatment is prone to result in degradation of the reverse osmosis membranes or in fouling (contamination of membrane surfaces), rendering stable operations difficult. In specific cases where reverse osmosis membranes are exposed to chemical substances as a potential cause of degradation of the reverse osmosis membranes, there is a concern that the reverse osmosis membranes may fall into a fatal situation that they cannot be restored even by cleaning. More specifically, such chemical substances may decompose the functional layers (portions developing their reverse osmosis functions) to result in lowering of capabilities of the membranes to separate water and solutes.

On the other hand, even if sufficient pretreatment is carried out, biofilms develop possibly everywhere from the interior of the intake pipelines to the interior of the reverse osmosis modules during long-term continuous operations, resulting in biofouling of the reverse osmosis membranes, thereby rendering stable operations difficult. For this reason, it has been a common practice to dose a cheap oxidant, such as hypochlorous acid, continuously or intermittently in order to prevent the formation of biofilms (see Non-Patent Document 1). However, such an oxidant tends to cause damage to the functional layers of reverse osmosis membranes. In particular, the polyamide which is mainly used in reverse osmosis membranes is susceptible to oxidative deterioration (see Non-Patent Document 2). It is hence a common practice to bring the inhibition of biofilm formation using an oxidant to an end before treatment with the reverse osmosis membranes and to neutralize the oxidant with a reductant to protect the reverse osmosis membranes. Incidentally, the reverse osmosis membranes are cleaned by dosing a bactericide or cleaning agent which exerts no detrimental effect on the reverse osmosis membranes, thereby being prevented from suffering biofouling.

However, it has been reported (see Non-Patent Document 3) that in cases where transition metals such as copper are contained in feed water (pretreated water) to be fed to reverse osmosis membranes even when sufficient neutralization with a reductant such as sodium hydrogen sulfite is performed before treatment with the reverse osmosis membranes, catalytic reactions are prone to occur, in which sulfite ions become sulfite radicals and the radicals in turn yield oxidizing substances such as oxidizing persulfate radical or sulfate radical, whereby the reverse osmosis membranes are oxidatively degraded.

As a method for preventing the oxidative degradation caused by such oxidizing substances generated by the catalytic reactions, dosage of a reductant in an excessive amount has generally been carried out. However, it has been reported (see Non-Patent Document 4) that the dosage of a reductant in an excessive amount was apt to generate biofouling through the use of the reductant as a feed. As a result, it becomes necessary to use a large amount of a bactericide or cleaning agent for stable operations, or the adoption of such a method leads to difficulties in stable operations or an increase in operation cost.

As countermeasures, there has been made a proposal to inhibit the catalytic generation of oxidizing substances by restricting the dosing amount of a reductant while monitoring the oxidation-reduction potential of the concentrate of the reverse osmosis membranes (see Patent Document 1). However, the oxidation-reduction potential is not so high in sensitivity, and hence it is not easy to totally protect the reverse osmosis membranes by merely monitoring the oxidation-reduction potential of the concentrate. Above all, merely monitoring the concentrate makes it possible to detect an abnormal condition only after the vicinity of the reverse osmosis membranes has fallen in an oxidized state, and therefore the reverse osmosis membranes are undesirably exposed to oxidizing substances in a short time period.

It has also been proposed (see Patent Document 2) that a phosphonic acid-based scale inhibitor is dosed to scavenge transition metals such as copper with the scale inhibitor, thereby inhibiting the transition metals such as copper from reacting with a reductant such as sodium hydrogen sulfite and from catalytically yielding oxidizing substances. However, there is a problem in that, depending on the sequence of dosing the reductant such as sodium hydrogen sulfite and scale inhibitor or on the timing of the dosing, the transition metals such as copper may react with the reductant before being scavenged by the scale inhibitor, making it impossible to effectively inhibit the formation of oxidizing substances. Further relevant prior art documents are US 2004/050793 A1 and US 2013/256226.

### BACKGROUND ART DOCUMENT

### PATENT DOCUMENT

Patent Document 1: JP-A-09-057076
Patent Document 2: JP-A-2013-52333
Patent Document 3: JP-A-02-115027
Patent Document 4: JP-A-2013-111559
Patent Document 5: Japanese Patent No. 5804228

### NON-PATENT DOCUMENT

Non-Patent Document 1: M. Furuichi et al., "Over-Eight-year Operation and Maintenance of 40,000 m3/day Seawater RO Plant in Japan," Proc. Of IDA World Congress, SP05-209 (2005)
Non-Patent Document 2: Tadahiro Uemura et al., "Chlorine Resistance of Reverse Osmosis Membranes and Changes in Membrane Structure and Performance Caused by Chlorination Degradation," Bulletin of the Society of Sea Water Science, Japan, vol. 57, No. 3 (2003)
Non-Patent Document 3: Yosef Ayyash et al., "Performance of reverse osmosis membrane in Jeddah Phase I plant," Desalination, 96, 215-224 (1994)
Non-Patent Document 4: M. Nagai et al., "SWRO Desalination for High Salinity," Proc. of IDA World Congress, DB09-173 (2009)

### SUMMARY OF THE INVENTION

### PROBLEMS THAT THE INVENTION IS TO SOLVE

The present invention relates to a water treatment method for obtaining permeate having a low concentration from raw water, such as seawater or river water, groundwater, lake water, or wastewater-treated water that contains a solute, e.g., a salt, using a semipermeable membrane module. More specifically, an object of the present invention is to provide a water treatment method for obtaining fresh water stably at low cost while inhibiting the semipermeable membrane module from suffering oxidative degradation.

### MEANS FOR SOLVING THE PROBLEMS

There is a method for treatment of water for reverse osmosis membranes provided in independent claim 1 which comprises the essential features of the invention. Further preferred embodiments are described in dependent claims 2-5.

According to the present invention, it becomes possible to stably obtain fresh water by desalination of seawater, notably seawater having a high concentration, such as seawater in the Middle East region, while inhibiting reverse osmosis membranes from suffering degradation and fouling. Additionally, the present invention enables to stably obtain fresh water at low cost using raw water such as salt-containing river water, groundwater, lake water, or wastewater-treated water, while inhibiting contamination of the semipermeable membrane device and degradation and fouling of the semipermeable membrane modules.

### BRIEF DESCRIPTION OF THE DRAWINGS

[Fig. 1] Fig. 1 is a process flow diagram of one example of semipermeable membrane separation device to which the water treatment method of the present invention is applicable.
[Fig. 2] Fig. 2 is a process flow diagram of another example of semipermeable membrane separation device to which the water treatment method of the present invention is applicable.
[Fig. 3] Fig. 3 is a process flow diagram of one example of semipermeable membrane separation device which is for practicing the water treatment method of the present invention and which includes a pretreatment unit having a biotreatment function.
[Fig. 4] Fig. 4 is a process flow diagram of one example of semipermeable membrane separation device which is for practicing the water treatment method of the present invention and includes a pretreatment unit having a biotreatment function and in which a phosphoric acid-based scale inhibitor is dosed upstream from the pretreatment unit.
[Fig. 5] Fig. 5 is a process flow diagram of one example of semipermeable membrane separation device which is for practicing the water treatment method of the present invention and includes a pretreatment unit having a biotreatment function and in which a phosphoric acid-based scale inhibitor is dosed upstream and downstream from the pretreatment unit.
[Fig. 6] Fig. 6 is a process flow diagram of one example of semipermeable separation membrane device in which a concentrate obtained by a water treatment method of the present invention is circulated to raw water.

### MODE FOR CARRYING OUT THE INVENTION

Preferred embodiments of the present invention are illustrated below by reference to the drawings. However, the scope of the invention should not be construed as being limited to these embodiments.

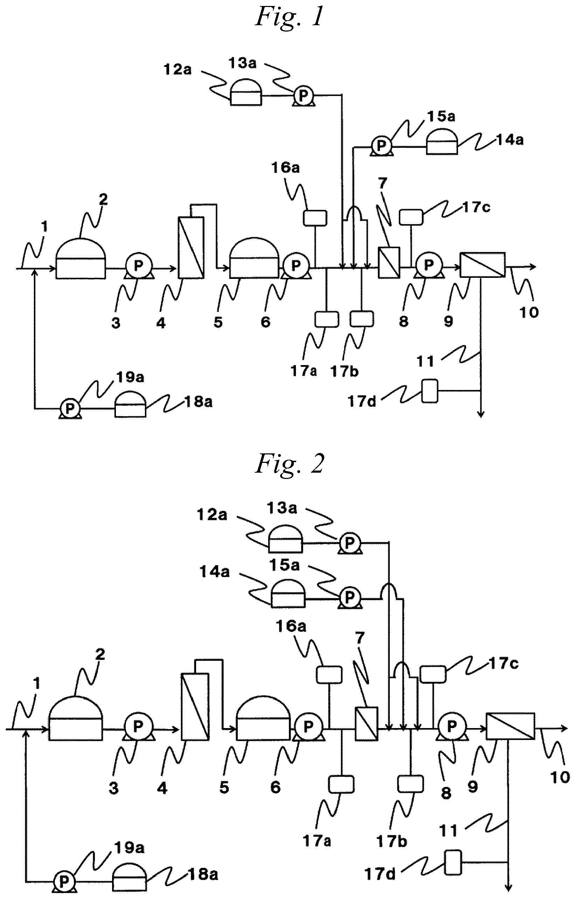

One example of a semipermeable membrane separation device to which the water treatment method of the present invention is applicable is shown in Fig. 1. In the semipermeable membrane separation device shown in Fig. 1, raw water is sent through a raw water line 1 to a raw water tank 2, temporarily stored therein, subsequently sent to a pretreatment unit 4 by a raw-water feed pump 3, and pretreated. The pretreated water is passed through an intermediate tank 5, a pretreated water feed pump 6, and a safety filter 7, pressurized by a booster pump 8, and then separated into a permeate 10 and a concentrate 11 by a semipermeable membrane module 9 including a semipermeable membrane module.

In cases when a scale inhibitor is dosed after a reductant has been dosed, oxidizing substances are successively yielded from a transition metal, e.g., copper, and the reductant, e.g., sodium hydrogen sulfite, by catalysis to undesirably degrade the semipermeable membrane module 9. The present invention is based on the finding, in view of such problem, that the catalytic formation of oxidizing substances can be inhibited by dosing a scale inhibitor within 0-60 seconds from initiation of mixing the transition metal, e.g., copper, with the reductant, e.g., sodium hydrogen sulfite.

According to the present invention, a reductant is dosed from a chemical injection tank (for reductant) 14a using a chemical injection pump (for reductant) 15a, and a scale inhibitor is dosed to the feed water which is being fed to the semipermeable membrane module 9, within 0-10 seconds before or after the dosing of the reductant, from a chemical injection tank (for scale inhibitor) 12a using a chemical injection pump (for scale inhibitor) 13a. Oxidizing substances are prone to be yielded from transition metals such as copper and reductants such as sodium hydrogen sulfite by catalysis, depending on the concentration of the transition metals such as copper, concentration of foreign matter including organic substances, reductant concentration, and salt concentration in the feed water to be fed to the semipermeable membrane module 9 and on the water temperature. Consequently, the scale inhibitor is dosed within 0-10 seconds, more preferably simultaneously. Thus, the catalytic formation of oxidizing substances can be more reliably inhibited.

In the case of dosing a scale inhibitor before the dosing of a reductant, the scale inhibitor may be dosed upstream from the point where the reductant is to be dosed, thereby scavenging transition metals such as copper with the scale inhibitor. Thus, the transition metals such as copper can be inhibited from reacting with the reductant, e.g., sodium hydrogen sulfite, and from catalytically yielding oxidizing substances.

Meanwhile, in cases when the feed water to be fed to the semipermeable membrane module 9 contains an oxidant such as hypochlorous acid, the scale inhibitor undesirably reacts successively with the oxidant such as hypochlorous acid and is thus deprived of the activity necessary for scavenging transition metals such as copper. Consequently, the scale inhibitor is dosed to the feed water for the semipermeable membrane module 9 at 0-10 seconds before the reductant is dosed to the feed water.
Thus, the deactivation of the scale inhibitor by oxidants can be diminished. Furthermore, the deactivation of the scale inhibitor by oxidants is prone to proceed depending on the concentration of foreign matter including organic substances and the concentration of oxidants such as hypochlorous acid in the feed water to be fed to the semipermeable membrane module 9 and on the water temperature. Consequently, the scale inhibitor is dosed within 0-10 seconds, more preferably simultaneously. Thus, the deactivation of the scale inhibitor by oxidants can by diminished.

It is preferable that the point where the scale inhibitor is dosed and the point where the reductant is dosed are disposed so as to be as close to each other as possible in order to simultaneously dose the scale inhibitor and the reductant to the feed water for the semipermeable membrane module 9. The scale inhibitor and the reductant may be mixed with each other in a chemical injection line before being dosed to the feed water for the semipermeable membrane module 9, or may be mixed with each other in a chemical injection tank.

The scale inhibitor dosing point is determined while taking account of the diameter (D_{F}) of the feed water pipeline for the semipermeable membrane module 9 and the feed water flow rate (Q_{F}). For example, in the case where a scale inhibitor is dosed within t seconds after dosing of a reductant, the diameter (D_{F}) [m] of the feed water pipeline for the semipermeable membrane module 9 and the feed water flow rate (Q_{F}) [m³/sec] are taken into account to dose the scale inhibitor downstream from the reductant dosing point within the distance of L=Q_{F}×t×4/(πD_{F}²) [m] therefrom, thereby mixing the scale inhibitor with the reductant which has been dosed at the reductant dosing point. In cases when pipes differing in inner diameter have been connected between a scale inhibitor dosing point and a reductant dosing point, the scale inhibitor dosing point and the reductant dosing point are determined by calculating a value of L from the inner diameter of each pipe and the feed water flow rate therefor and integrating the values of L.

A reductant is dosed intermittently or continuously. However, the dosing thereof may be controlled in accordance with the chlorine concentrations and oxidation-reduction potentials (ORP) of both the feed water for the semipermeable membrane module 9 and the concentrate. Use may be made of a method in which the chlorine concentration and oxidation-reduction potential of the feed water for the semipermeable membrane module 9 are measured with a chlorine concentration meter 16a and an oxidation-reduction potential (ORP) meter 17a and the reductant in the chemical injection tank (for reductant) 14a is dosed so that the chlorine concentration and oxidation-reduction potential (ORP) do not exceed values thereof set for operation management.

Oxidation-reduction potential meters (or chlorine concentration meters), though not particularly restricted as to their installation locations and the number thereof, are generally installed in a plurality of locations. Preferred examples include a method in which an oxidation-reduction potential meter 17a is installed and measurements are made thereby in order to determine whether it is necessary to dose a reductant with a chemical injection pump 15a, and the amount of the reductant to be dosed is regulated on the basis of the oxidation-reduction potential(s) measured by at least one of succeeding oxidation-reduction potential meters 17b, 17c, and 17d. In the case where the semipermeable membrane in the semipermeable membrane module 9 is a polyamide-based reverse osmosis membrane, it is preferred to keep the oxidation-reduction potential at 350 mV or lower, and it is more preferred to regulate the reductant dosage amount so as to result in an oxidation-reduction potential of 200 mV or lower. However, oxidative degradation is more prone to occur depending on the kind of reverse osmosis, and it is hence preferable that oxidation-reduction potentials for use in operation management are suitably set in accordance with the kind of reverse osmosis membrane.

A reductant and a scale inhibitor may be dosed upstream from a safety filter 7. It is, however, preferred to dose a reductant and a scale inhibitor downstream from the safety filter 7 as shown in Fig. 2 because this configuration enables the safety filter 7 also to be cleaned with an oxidant which has been dosed continuously or intermittently in order to sterilize and clean the system.

A scale inhibitor is dosed intermittently or continuously. In view of the purpose of the dosing, a scale inhibitor may be dosed in the following manner. Under conditions where there is a high risk of scaling, which have been determined from water temperature, scale component concentration, ionic strength, pH, etc., the scale inhibitor basically is continuously dosed, whereas under conditions where there is a low risk of scaling, the scale inhibitor need not be dosed. For attaining this, it is necessary to measure the real-time water temperature, scale component concentration, ionic strength, and pH without delay and to cope with momentary inflow of an oxidant or a transition metal, which accelerates oxidation, thereby determining whether a scale inhibitor needs to be dosed or not. Namely, a high degree of operation management technique is required. A preferred method in such cases is to continuously dose a scale inhibitor, because this method is simple and effective in reliably inhibiting oxidative degradation and scaling although the method entails the cost of the scale inhibitor.

The present invention is especially effective in cases when there is a risk that the feed water to be fed to the semipermeable membrane module 9 contains transition metals. Specifically, in cases when the raw water or the pretreated water contains transition metals in an amount of 0.01 mg/L or larger, application of the present invention is highly effective. Examples of transition metals suitable for application of the present invention thereto, i.e., prone to contribute to the oxidative degradation of the reverse osmosis membrane, include Fe(II/III), Mn(II), Mn(III), Mn(IV), Cu(I/II), Co(II/III), Ni(II), and Cr(II/III/IV/VI).

Scale inhibitors applicable in the present invention preferably are scale inhibitors including phosphoric acid-based organic compounds. More suitable are organic compounds based on phosphorous acid or a phosphonic acid. In particular, a preferred scale inhibitor includes at least one organic acid selected from among aminotris(methylenephosphonic acid), diethylenetriaminepenta(methylenephosphonic acid), hexaethylenediaminetetra(methylenephosphonic acid), ethylenediaminetetra(methylenephosphonic acid), 1-hydroxyethylene-1,1-diphosphonic acid, and tetramethylenediaminetetra(methylenephosphonic acid) or a salt thereof, and has a molecular weight of 200-10,000 g/mol. The molecular weight thereof is more preferably 200-1,000 g/mol. In case where the molecular weight thereof is too low, there is a possibility that this scale inhibitor might pass through the semipermeable membrane and leak to the permeate side. Conversely, in case where the molecular weight thereof is too high, this scale inhibitor needs to be dosed in an increased amount, resulting in a risk that this scale inhibitor itself is causative of fouling. Too low or too high molecular weights thereof are hence undesirable.

It is preferable that the scale inhibitor to be used in the present invention contains, as an auxiliary ingredient, at least one compound selected from among polyphosphoric acid, phosphorous acid, phosphonic acid, phosphorus hydride, phosphine oxide, ascorbic acid, catechin, polyphenols, and gallic acid.

Also preferred are scale inhibitors having a reducing function. This is because in cases when such a scale inhibitor is used, the amount of the reductant, e.g., sodium hydrogen sulfite, to be dosed can be reduced and this brings about a reduction in the amount of oxidizing substances, such as persulfate radicals and sulfate radical, to be yielded by catalysis.

This water treatment device can be operated so that an oxidant for sterilizing and cleaning the system is dosed and supplied, according to need, to the raw water or pretreated water continuously or intermittently from a chemical injection tank (for oxidant) 18a using a chemical injection pump (for oxidant) 19a and a reductant is dosed thereafter. This oxidant is not particularly limited, and most representative examples thereof are alkali salts of hypochlorous acid or permanganic acid. Other examples thereof include chlorous acid, chloric acid, perchloric acid, halogens, chromic acid and alkali salts thereof, chlorine dioxide, and hydrogen peroxide. The reductant to be used here is not particularly limited, and preferably includes any of sodium hydrogen sulfite, sodium sulfite, sodium pyrosulfite, and sodium thiosulfate.

Likewise, a pH adjuster, a flocculant, etc. necessary for pretreatment can be doped according to need.

Generally used as the pH adjuster is sulfuric acid or sodium hydroxide, though there is no particular restriction. As the flocculant, use can be made, as appropriate, of a cationic flocculant, an anionic flocculant, or combination of a plurality of flocculants. However, with the consideration given to possible leakage of not-yet-flocculated matter into the semipermeable membrane module, it is preferable to use an anionic flocculant having large repulsion to charges possessed generally by the semipermeable membrane.

In the case of applying cationic flocculants, since they have a possibility of being adsorbed onto the semipermeable membrane, it is recommended that they are applied after having an advance checking to verify the absence of problems. Cationic flocculants have positive charges, and so long as they tend to selectively flocculate negatively charged substances, no restrictions are imposed thereon. Accordingly, it is possible to use, for example, inorganic flocculants, which are low-priced and excellent in capability of flocculating fine particles, and organic polymeric flocculants which are, though expensive, high in flocculation force because of having a large number of functional groups. Suitable examples of inorganic flocculants include ferric chloride, ferric (poly)sulfate, aluminum sulfate, and aluminum (poly)chloride. In the case of intending to use the treated water for drinking water in particular, there is a possibility that aluminum concentration may become an issue, and hence the use of iron compounds, notably low-price ferric chloride, is preferred. Examples of representative polymeric flocculants include aniline derivatives, polyethylene imine, polyamine, polyamide, and cation-modified polyacrylamide.

On the other hand, contrary to cationic flocculants, anionic flocculants have negative charges, and no particular restrictions are imposed thereon so long as they tend to selectively flocculate positively charged substances. And generally used anionic flocculants are organic flocculants such as polymeric flocculants. Specifically, alginic acid, which is a natural organic polymer, and polyacrylamide, which is an organic polymeric flocculant, are representative examples. They are infinitely preferable also in view of their effect.

Incidentally, the injection of chemicals described above may be either line injection or in-tank injection without particular restrictions. It is preferable that stirrers, static mixers, and the like are provided according to need.

As materials for semipermeable membranes to which the present invention is applicable, polymeric materials such as cellulose acetate-based polymers, polyamide, polyester, polyimide, and vinyl polymers can be used. Moreover, the membrane structure thereof may be either of an asymmetric membrane having a dense layer in at least one surface of the membrane and having micropores, the pore diameter of which gradually becomes larger from the dense layer toward an inner part of the membrane or toward the other surface, or a composite membrane having an exceedingly thin separation functional layer formed on the dense layer of the asymmetric membrane and made of another material.

Of such membranes, however, composite membranes having a functional layer made from polyamide are preferred since it has high pressure resistance with high water permeability and high solute-removing performance, and further has excellent potential. In order to obtain fresh water from aqueous solutions having high concentration, including seawater in particular, it is necessary to apply pressure higher than osmosis pressure. Thus there are many cases which require application of an operating pressure of at least 5 MPa. For maintaining high water permeability and blocking performance against such an operating pressure, it is appropriate that the membrane have a structure that polyamide is used for its separation functional layer and the separation functional layer is held by a support including a porous membrane or a nonwoven fabric.

Additionally, as the polyamide semipermeable membrane, a composite semipermeable membrane having on a support a functional layer of crosslinked polyamide obtained by polycondensation reaction between polyfunctional amine and polyfunctional acid halide is appropriate. Such crosslinked polyamide has high chemical stability to acids and alkalis. It is preferable that the crosslinked polyamide is formed by interfacial polycondensation reaction between polyfunctional amine and polyfunctional acid halide, and at least either the polyfunctional amine or the polyfunctional acid halide include a trifunctional or higher compound.

Herein, the term polyfunctional amine refers to amine having at least two primary and/or secondary amino groups per one molecule thereof, and examples thereof include aromatic polyfunctional amines such as phenylenediamine and xylylenediamine in which each benzene nucleus has two amino groups at any of ortho-, meta- and para-positions, 1,3,5-triaminobenzene, 1,2,4-triaminobenzene, and 3,5-diaminobenzoic acid; aliphatic amines such as ethylenediamine and propylenediamine; and alicyclic polyfunctional amines such as 1,2-diaminocyclohexane, 1,4-diaminocyclohexane, piperazine, 1,3-bispiperidylpropane and 4-aminomethylpiperqazine. Of these amines, aromatic polyfunctional amines are preferred in consideration of selective separation performance, permeability and thermal resistance of the membrane. As such polyfunctional aromatic amines, m-phenylenediamine, p-phenylenediamine and 1,3,5-triaminobenzene are used suitably. Among them, m-phenylenediamine (hereinafter abbreviated as m-PDA) is more suitable because of its ease of availability and handing. These polyfunctional amines may be used alone, or as mixtures of two or more thereof.

The term polyfunctional acid halide refers to acid halide having at least two halogenated carbonyl groups per one molecule thereof. Examples of a trifunctional acid halide include trimesic acid chloride, 1,3,5-cyclohexanetricarboxylic acid trichloride and 1,2,4-cyclobutanetricarboxylic acid trichloride, and examples of a bifunctional acid halide include aromatic bifunctional acid halides such as biphenyldicarboxylic acid chloride, biphenylenecarboxylic acid dichloride, azobenzenedicarboxylic acid dichloride, terephthalic acid chloride, isophthalic acid chloride and naphthalenedicarboxylic acid chloride; aliphatic bifunctional acid halides such as adipoyl chloride and sebacoyl chloride; and alicyclic bifunctional acid halides such as cyclopentanedicarboxylic acid dichloride, cyclohexanedicarboxylic acid dichloride and tetrahydrofurandicarboxylic acid dichloride. In consideration of reactivity to polyfunctional amines, the polyfunctional acid halides are preferably polyfunctional acid chlorides, and in consideration of selective separation performance and thermal resistance, the polyfunctional acid halides are preferably polyfunctional aromatic acid chlorides. Among them, trimesic acid chloride is preferred in view of ease of availability and handling. These polyfunctional acid halides may be used alone or as mixtures of two or more thereof.

Methods for making a polyfunctional acid halide be present in a separation functional layer have no particular restrictions. For example, a polyfunctional acid halide may be made to be present in a separation functional layer through the formation of covalent bonds by bringing a solution of aliphatic acid halide into contact with the surface of a separation functional layer formed by interfacial polycondensation between polyfunctional amine and polyfunctional acid halide, or by making aliphatic acid halide be co-present at the time of interfacial polycondensation between polyfunctional amine and polyfunctional aromatic acid halide.

More specifically, formation of a polyamide separation functional layer on a microporous supporting membrane may be performed in a way that an aqueous solution of polyfunctional amine, an organic solvent solution of polyfunctional acid halide and an organic solvent solution of C₁₋₄ aliphatic acid halide different from the foregoing one are brought into contact with one another on the microporous supporting membrane and subjected to interfacial polycondensation. In this case, the aliphatic acid halides usable in the present invention have a carbon number generally from 1 to 4, preferably from 2 to 4. With increasing in the carbon number, the aliphatic acid halides suffer a decrease in reactivity because of increased steric hindrance, or they become difficult to approach reaction sites of the polyfunctional acid halide to result in not only inhibition on smooth formation of membrane but also degradation in membrane performance. Examples of such an aliphatic acid halide include methanesulfonyl chloride, acetyl chloride, propionyl chloride, butyryl chloride, oxalyl chloride, malonic acid dichloride, succinic acid dichloride, maleic acid dichloride, fumaric acid dichloride, chlorosulfonylacetyl chloride and N,N-dimethylaminocarbonyl chloride. They may be used alone or as mixtures of two or more thereof, but those having oxalyl chloride as the main ingredient are preferred because they allow formation of balanced membranes which have dense structure and moreover do not suffer much degradation in water permeability. However, polyamide is susceptible to oxidative degradation and liable to be damaged by oxidants such as hypochlorous acid. The application of the present invention therefore can efficiently protect semipermeable membranes against oxidants and is exceedingly effective.

In addition, as an example of post-treatment for enhancing the ion removal performance of the polyamide semipermeable membrane, short-time chloride-contact treatment may be mentioned. There are cases where this treatment is applied in seawater desalination in particular as a method for enhancing the desalination ratio. Such membranes are brought beforehand into contact with oxidants, and they are therefore inferior in durability against the oxidants to membranes having never undergone chlorine-contact treatment. Thus it is preferable that more exacting control is given over contact with oxidants, and hence the application of the present invention can develop a significant effect.

The support including a microporous supporting membrane is a layer having substantially no separation performance, and it is provided for the purpose of giving mechanical strength to a separation functional layer of crosslinked polyamide having substantial separation performance. As the support, one which is obtained by forming a microporous supporting membrane on a base material such as fabric or nonwoven fabric may be mentioned.

As to a material for the microporous supporting membrane, there are no particular restrictions, and examples thereof include homopolymers of polysulfone, cellulose acetate, cellulose nitrate, polyvinyl chloride, polyacrylonitrile, polyphenylene sulfide and polyphenylene sulfide sulfone, and copolymers thereof. These homopolymers and copolymers can be used alone or as blends thereof. Among these materials, polysulfone is preferably used because it has high chemical, mechanical and thermal stability and easiness of molding. In addition, the microporous supporting membrane has no particular restrictions as to its structure, and it may have either a structure such that the membrane has micropores uniform in pore diameter throughout its front surface and rear surface, or an asymmetric structure such that the membrane has densely packed micropores at one surface side thereof and the pore diameter thereof is gradually increased from this surface toward the other surface. The size of densely packed micropores is preferably 100 nm or below.

Herein, in order that the composite semipermeable membrane fully exerts performance thereof, it is appropriate that the air permeability of a base material thereof is 0.1-2.0 cm³/cm²·s, preferably 0.4-1.5 cm³/cm²·s. Incidentally, the air permeability is measured on the basis of the Frazier method in accordance with JIS L1096. As to usable nonwoven fabric, though it also has no particular restrictions, the use of nonwoven fabric made from a mixture of at least two kinds of polyester fibers whose single fiber fineness is from 0.3 to 2.0 dtex, especially from 0.1 to 0.6 dtex, is preferred. In this case, pores having diameters of 10 µm or below can be formed among fibers forming the base material, whereby the force for bonding the microporous supporting membrane and the nonwoven fabric can be enhanced. Further, it is preferable that the ratio of pores having diameter of 10 µm or below is 90% or above. The term diameter used herein is a value measured on the basis of the bubble point method in accordance with JIS K3832.

Elements used in semipermeable membrane modules to which the present invention is applicable may be made into forms matched appropriately with membrane forms of the semipermeable membranes. The semipermeable membranes for use in the present invention may be either hollow-fiber membranes, tubular membranes, or flat-sheet membranes, and the elements have no particular restrictions so long as they each have liquid chambers on both sides of each semipermeable membrane and allow pressure passage of liquid from one surface to the other surface of the semipermeable membrane. In the case of flat-sheet membranes, the plate-and-frame type with a structure that a plurality of composite semipermeable membranes supported by frames are stacked up and the type referred to as a spiral type are generally used. Such an element is used in a state of being housed in a rectangular or cylindrical case. In the cases of hollow-fiber membranes and tubular membranes, an element is constructed by placing a plurality of semipermeable membranes in a case and subjecting their end portions to potting to form liquid rooms. As liquid separation device, these elements are used alone or in a state that a plurality of elements are connected in series or parallel.

Of the forms of these elements, that of the spiral type is most typical. The element of such a type is an element in a state that a flat-sheet separation membrane together with a feed-side channel member and a permeation-side channel member, and further a film for enhancing pressure resistance, if necessary, is wound around a water collection tube in a spiral fashion. As the feed-side channel member, a material in net form, a material in mesh form, a sheet with grooves or a corrugated sheet can be used. And as the permeation-side channel member also, a material in net form, a material in mesh form, a sheet with grooves or a corrugated sheet can be used. It is all right for both the feed-side channel member and the permeation-side channel member to be either a net or sheet independent of the separation membrane or a net or sheet integrated with the separation membrane through bonding, fusion or the like.

The water collection tube is a tube having a plurality of holes in its periphery, and the material thereof may be either resin or metal, but resins, such as noryl resin and ABS resin, are usually used in view of cost and durability. As a method for sealing the end portions of a separation membrane, bonding methods are suitably used. Examples of an adhesive usable include publicly known adhesives, such as urethane-based adhesives, epoxy-based adhesives and hot-melt adhesives.

As the pretreatment for feeding raw water into a semipermeable membrane module in the present invention, removal of suspended matter and organic matter, sterilization and the like may be mentioned. Such pretreatment makes it possible to prevent decrease in performance of the semipermeable membrane from occurring due to clogging and degradation thereof. The specific pretreatment may be chosen as appropriate with reference to properties of raw water. For example, in the case of treating raw water containing suspended matter in high amount, it is appropriate to dose a flocculant such as aluminum polychloride into the raw water and then perform sand filtration, and further, for example, perform filtration using a microfiltration membrane or an ultrafiltration membrane which is formed by bundling a plurality of hollow-fiber membranes.

In the case of a pretreatment step (e.g., biological sand filtration) having a biotreatment function for inhibiting biofouling by removing BOD components with a biofilm formed on the surface of a particulate filter medium, it is preferable that a reductant is dosed upstream from the pretreatment step having the biotreatment function to deactivate oxidants such as chlorine in order to prevent the biofilm from being damaged by the oxidants.

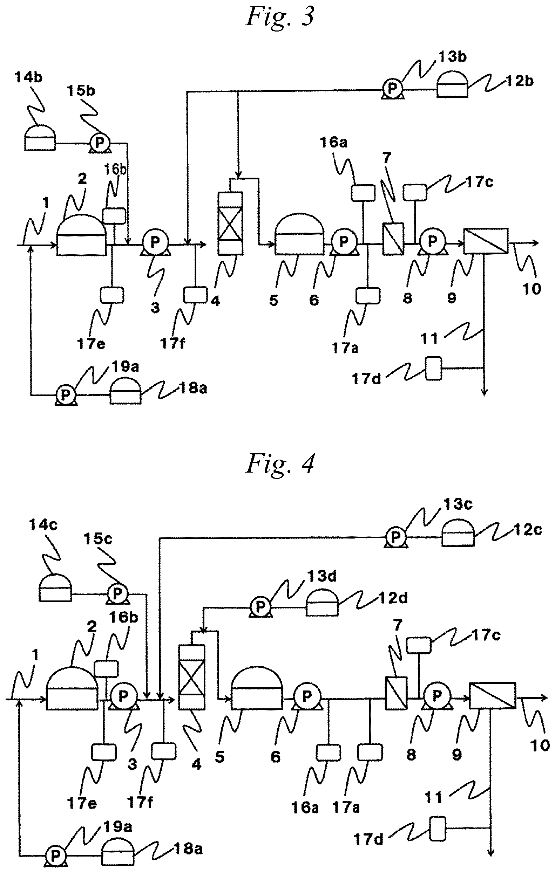

In the present invention, as shown in Fig. 3, a reductant is sent from a chemical injection tank (for reductant) 14b using a chemical injection pump (for reductant) 15b and dosed upstream from a pretreatment unit 4 having a biotreatment function, and a scale inhibitor is dosed within 0-60 seconds before or after the dosing of the reductant, from a chemical injection tank (for scale inhibitor) 12b using a chemical injection pump (for scale inhibitor) 13b. Thus, the pretreatment step having a biotreatment function can be stabilized and oxidizing substances can be inhibited from being yielded by catalysis.

Although the dosing of the reductant upstream from the pretreatment unit 4 having a biotreatment function is performed intermittently or continuously, this dosing may be controlled in accordance with the chlorine concentration or oxidation-reduction potential (ORP) of the pretreatment unit 4 having a biotreatment function. Use may be made of a method in which the chlorine concentration or oxidation-reduction potential of the feed water for the pretreatment unit 4 having a biotreatment function is measured with a chlorine concentration meter 16b or an oxidation-reduction potential (ORP) meter 17e and the reductant in the chemical injection tank (reductant) 14b is dosed so that the chlorine concentration or oxidation-reduction potential (ORP) is kept at or below a value thereof set for operation management.

Oxidation-reduction potential meters (or chlorine concentration meters), though not particularly restricted as to their installation locations and the number thereof, are generally installed in a plurality of locations. Preferred examples include a method in which an oxidation-reduction potential meter 17e is installed and measurements are made thereby in order to determine whether it is necessary to dose a reductant with a chemical injection pump 15b, and the amount of the reductant to be dosed is regulated on the basis of the oxidation-reduction potential measured by a succeeding oxidation-reduction potential meter 17f. In this method, it is preferred to keep the oxidation-reduction potential at 350 mV or lower in order to inhibit the oxidant from damaging the microorganism present in the pretreatment unit 4 having a biotreatment function. It is more preferable that the amount of the reductant to be dosed is regulated so as to keep the oxidation-reduction potential at 200 mV or lower.

In the case where the pretreatment unit 4 having a biotreatment function, e.g., a biological sand filtration tank, lies between a reductant dosing point and a scale inhibitor dosing point, the scale inhibitor dosing point is determined while taking account of the flow rate of the feed water, the length and inner diameter of the pipeline on the inlet side of the biological sand filtration tank, the length and inner diameter of the pipeline on the outlet side thereof, the linear velocity of the biological sand filtration, and the thickness of the sand layer. Specifically, in the case where a scale inhibitor is dosed within t seconds after a reductant was dosed upstream from the biological sand filtration tank 4, the following factors are taken into account: the pipeline length from the reductant dosing point to the inlet of the biological sand filtration tank 4 (Lᵢₙ) [m]; the inner diameter of the inlet-side pipeline (Dᵢₙ) [m]; the linear velocity in the biological sand filtration tank 4 (Lv) [m/sec]; the thickness of the sand layer (H) [m]; the pipeline length from the outlet of the biological sand filtration tank 4 to the scale inhibitor dosing point (Lₒᵤₜ) [m]; the inner diameter of the outlet-side pipeline (Dₒᵤₜ) [m]; and the flow rate of the feed water (Q_{F}) [m³/sec]. The pipeline length from the reductant dosing point to the inlet of the biological sand filtration tank 4 (Lᵢₙ) [m] and the pipeline length from the outlet of the biological sand filtration tank 4 to the scale inhibitor dosing point (Lₒᵤₜ) [m] are determined so that t=π/4×(Dᵢₙ²×Lᵢₙ+Dₒᵤₜ²×Lₒᵤₜ)/Q_{F}+H/Lv (sec) is in the range of 0-60 seconds, preferably 0-10 seconds.

In cases when, as shown in Fig. 4, a scale inhibitor including a phosphoric acid-based organic compound is dosed upstream from the pretreatment unit 4 having a biotreatment function from a chemical injection tank (for scale inhibitor) 12c using a chemical injection pump (for scale inhibitor) 13c, there is a possibility that the phosphoric acid in the scale inhibitor might be taken in as a nutrient salt by the biofilm present in the pretreatment unit 4, and this may result in a decrease in the effect of the scale inhibitor to scavenge transition metals including copper. A method effective for coping with this problem is to additionally dose a scale inhibitor downstream from the pretreatment unit 4 having a biotreatment function from a chemical injection tank (for scale inhibitor) 12c using a chemical injection pump (for scale inhibitor) 13c. Within 0-60 seconds after treatment in the pretreatment step having a biotreatment function, the scale inhibitor is additionally dosed from the chemical injection tank (for scale inhibitor) 12d using the chemical injection pump (for scale inhibitor) 13d. Thus, the pretreatment step can be stabilized and oxidizing substances can be inhibited from being yielded by catalysis.

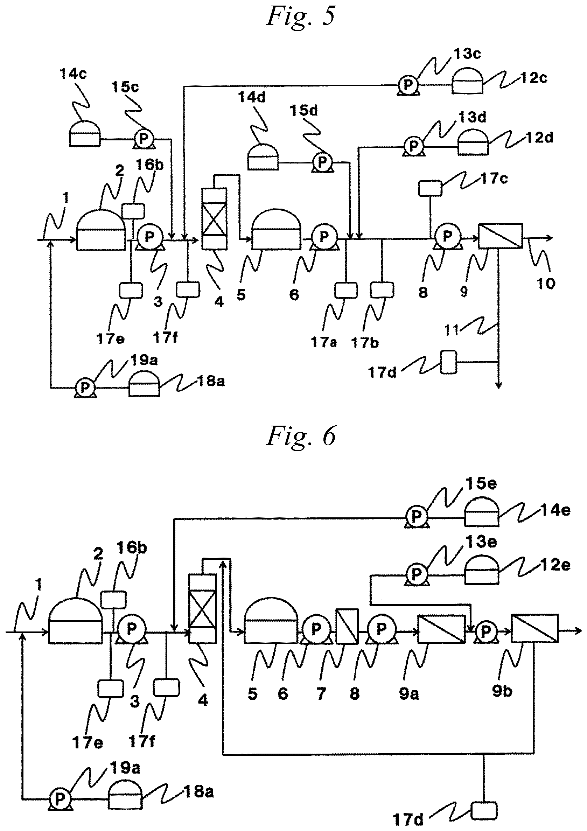

Furthermore, in cases when, as shown in Fig. 5, a reductant and a scale inhibitor were dosed upstream from the pretreatment unit 4 having a biotreatment function but oxidizing substances have been newly yielded or have come into the feed water before the feed water reaches the semipermeable membrane module 9, then there is a possibility that the semipermeable membrane module 9 might suffer oxidative degradation. Hence, a reductant is dosed downstream from the pretreatment unit 4 having a biotreatment function from a chemical injection tank (for reductant) 14d using a chemical injection pump (for reductant) 15d, and a scale inhibitor is dosed within 0-60 seconds before or after the dosing of the reductant, from a chemical injection tank (for scale inhibitor) 12d using a chemical injection pump (for scale inhibitor) 13d. This method is preferred because the pretreatment step can be stabilized and oxidizing substances can be inhibited from being yielded by catalysis.

The scale inhibitors to be dosed respectively upstream and downstream from the pretreatment unit 4 having a biotreatment function may be of the same kind or different kinds. However, the scale inhibitors preferably are of the same kind from the standpoints of facility and control of dosing. Meanwhile, in cases when a phosphorus-containing phosphate, which is a nutrient salt, is supplied to the membrane surface of the semipermeable membrane module 9, biofouling is promoted and the biofouling results in uptake of the phosphoric acid. There is hence a possibility that the scale inhibitor might become unable to scavenge transition metals such as copper and the catalytic formation of oxidizing substances might occur. It is therefore preferable that a scale inhibitor including an organic substance not based on phosphoric acid is dosed upstream from the semipermeable membrane module 9 from a chemical injection tank (for scale inhibitor) 12d using a chemical injection pump (for scale inhibitor) 13d.

As scale inhibitors not based on phosphoric acid that are applicable to the present invention, use can be made of synthetic polymers such as poly(acrylic acid), sulfonated polystyrene, polyacrylamide, and polyallylamine, natural polymers such as carboxymethyl cellulose, chitosan, and alginic acid, and monomers such as ethylenediaminetetraacetic acid. Ethylenediaminetetraacetic acid (EDTA) is especially suitable for use from the standpoints of applicability including solubility and cost.

In a permeate two-stage method, the concentrate from the second-stage semipermeable membrane module 9b frequently has a lower concentration than the raw water and a method is often used in which the concentrate is circulated and mixed with the raw water to lower the concentration of raw water, as shown in Fig. 6. In the second stage, the pH is often heightened for the purpose of increasing the recovery ratio or improving the removal ratio of boron and there are hence cases where scaling is prone to occur. Consequently, a scale inhibitor also is often used. In this case, the scale inhibitor dosed from a chemical injection tank (for scale inhibitor) 12e using a chemical injection pump (for scale inhibitor) 13e is mixed with the feed water to be fed to the second-stage semipermeable membrane module 9b, and the concentrate from the second-stage semipermeable membrane module 9b, which contains the scale inhibitor, is sent to the first-stage semipermeable membrane module 9a. This method is hence preferred.

### EXAMPLES

Effects of the present invention have been ascertained by using water treatment device configured as follows.

First, 3.5% seawater was stored in a water tank while continuously dosing sodium hypochlorite in an amount of 1 mg/L-Cl₂ and copper sulfate in an amount of 0.1 mg/L-Cu. Subsequently, one pressurized-type hollow-fiber membrane module (HFU-2008) manufactured by Toray Industries Inc., in which the membranes were hollow-fiber ultrafiltration membranes made from polyvinylidene fluoride having a cut-off molecular weight of 1.5×10⁵ Da and each having a membrane area of 11.5 m², was used as a pretreatment unit. The whole quantity of seawater stored was filtrated in a filtration flux of 3 m/d through the use of a pressure pump. The thus-pretreated seawater was stored in an intermediate water tank. The pretreatment unit had a backwash pump for feeding filtrate from a secondary side to a primary side of the membrane and a compressor for feeding air from the bottom of the pretreatment unit to the primary side of the membrane. Continuous filtration was carried out for 30 minutes, then the filtration was once suspended and one-minute cleaning in which backwashing using filtrate in the intermediate water tank as feed water in a backwash flux of 3.3 m/d and air scrubbing of feeding 14 NL/min of air from the bottom of the pretreatment unit were carried out at the same time, was performed, and thereafter the contaminations in the pretreatment unit were discharged out. Then the operation was returned to the normal filtration. And this operation cycle was repeated. A scale inhibitor was dosed to the filtrate stored in the intermediate water tank, and a reductant was thereafter dosed thereto. The resulting filtrate was passed through a safety filter by a feed pump, and then fed into a semipermeable membrane module by a booster pump, thereby generating fresh water. The semipermeable membrane module used herein was one reverse osmosis membrane element manufactured by Toray Industries Inc. (TM810C), and was operated under conditions that the RO feed flow rate was 1.0 m³/h and the permeate flow rate was 0.12 m³/h (recovery ratio: 12%).

### <Example 1>

The operations were continued for 3 months while dosing a commercially available phosphonic acid-based scale inhibitor with a concentration of 1 mg/L and while continuously dosing sodium hydrogen sulfite with a concentration of 2 mg/L upstream from the semipermeable membrane module within 10 seconds after the dosing of the scale inhibitor. During the operations, the oxidation-reduction potential of pretreated water was kept at 350 mV or lower. And the oxidation-reduction potential of a concentrate of the reverse osmosis membrane was also at 350 mV or lower.

After the operations, the reverse osmosis membrane element put to use sustained a 10% reduction in fresh-water production amount and a 15% increase in differential pressure, and the obtained permeate was degraded so that a salt concentration thereof was increased by 1.1 times as compared to permeate obtained at the initial stage. The resulting reverse osmosis membrane element was disassembled, and cleaned with an acid and an alkali; as a result, its performance including fresh-water production amount and water quality of permeate were restored to the equivalents of its initial ones. Furthermore, according to ESCA (electron spectroscopy for chemical analysis) made on the membrane surface, no C-Cl bonding was detected, and therefrom it was presumed that the membrane surface had no oxidative degradation attributed to contact with halogen.

### <Example 2>

The operations were carried out under the same conditions as in Example 1, except that sodium hydrogen sulfite with a concentration of 2 mg/L was continuously dosed within 60 seconds after the commercially available phosphonic acid-based scale inhibitor with a concentration of 1 mg/L was dosed. During the operations, the oxidation-reduction potential of pretreated water was kept at 350 mV or lower. And the oxidation-reduction potential of a concentrate of the reverse osmosis membrane was also kept at 350 mV or lower.

After the operations, the reverse osmosis membrane element put to use sustained a 10% reduction in fresh-water production amount and a 15% increase in differential pressure, and the obtained permeate was degraded so that a salt concentration thereof was increased by 1.2 times as compared to permeate obtained at the initial stage. The resulting reverse osmosis membrane element was disassembled, and cleaned with an acid and an alkali; as a result, its performance including fresh-water production amount and water quality of permeate were restored to the equivalents of its initial ones. Furthermore, according to ESCA (electron spectroscopy for chemical analysis) made on the membrane surface, no C-Cl bonding was detected, and therefrom it was presumed that the membrane surface had no oxidative degradation attributed to contact with halogen.

### <Example 3>

The operations were carried out under the same conditions as in Example 1, except that the commercially available phosphonic acid-based scale inhibitor with a concentration of 1 mg/L was continuously dosed within 60 seconds after sodium hydrogen sulfite with a concentration of 2 mg/L was dosed. During the operations, the oxidation-reduction potential of pretreated water was kept at 350 mV or lower. And the oxidation-reduction potential of a concentrate of the reverse osmosis membrane was also kept at 350 mV or lower.

After the operations, the reverse osmosis membrane element put to use sustained a 10% reduction in fresh-water production amount and a 15% increase in differential pressure, and the obtained permeate was degraded so that a salt concentration thereof was increased by 1.2 times as compared to permeate obtained at the initial stage. The resulting reverse osmosis membrane element was disassembled, and cleaned with an acid and an alkali; as a result, its performance including fresh-water production amount and water quality of permeate were restored to the equivalents of its initial ones. Furthermore, according to ESCA (electron spectroscopy for chemical analysis) made on the membrane surface, no C-Cl bonding was detected, and therefrom it was presumed that the membrane surface had no oxidative degradation attributed to contact with halogen.

### <Example 4>

The operations were carried out under the same conditions as in Example 1, except that the commercially available phosphonic acid-based scale inhibitor with a concentration of 1 mg/L was continuously dosed within 10 seconds after sodium hydrogen sulfite with a concentration of 2 mg/L was dosed. During the operations, the oxidation-reduction potential of pretreated water was kept at 350 mV or lower. And the oxidation-reduction potential of a concentrate of the reverse osmosis membrane was also kept at 350 mV or lower.

After the operations, the reverse osmosis membrane element put to use sustained a 10% reduction in fresh-water production amount and a 15% increase in differential pressure, and the obtained permeate was degraded so that a salt concentration thereof was increased by 1.1 times as compared to permeate obtained at the initial stage. The resulting reverse osmosis membrane element was disassembled, and cleaned with an acid and an alkali; as a result, its performance including fresh-water production amount and water quality of permeate were restored to the equivalents of its initial ones. Furthermore, according to ESCA (electron spectroscopy for chemical analysis) made on the membrane surface, no C-Cl bonding was detected, and therefrom it was presumed that the membrane surface had no oxidative degradation attributed to contact with halogen.

### <Example 5>

The operations were carried out under the same conditions as in Example 1, except that: an operation cycle was repeated in which the whole quantity of the raw water was filtrated in a filtration flux of 0.5 m/d, continuous filtration was carried out for one day, then the filtration was once suspended, the contaminations in the pretreatment tank were discharged out, and thereafter the operation was returned to the normal filtration, so that the biomass including both a biofilm accumulated on the surface of the filtration membranes and suspended matter held on the primary side (feed water side) of the filtration membranes came to perform a biotreatment function; sodium hydrogen sulfite with a concentration of 2 mg/L was dosed upstream from the pretreatment unit and, within 10 seconds after the dosing thereof, the commercially available phosphonic acid-based scale inhibitor with a concentration of 1 mg/L was continuously dosed; and poly(acrylic acid), which was a scale inhibitor not based on phosphoric acid, with a concentration of 1 mg/L was continuously dosed downstream from the pretreatment unit. During the operations, the oxidation-reduction potential of pretreated water was kept at 350 mV or lower. And the oxidation-reduction potential of a concentrate of the reverse osmosis membrane was also kept at 350 mV or lower.

After the operations, the reverse osmosis membrane element put to use sustained a 10% reduction in fresh-water production amount and a 5% increase in differential pressure, and the obtained permeate was degraded so that a salt concentration thereof was increased by 1.1 times as compared to permeate obtained at the initial stage. The resulting reverse osmosis membrane element was disassembled, and cleaned with an acid and an alkali; as a result, its performance including fresh-water production amount and water quality of permeate were restored to the equivalents of its initial ones. Furthermore, according to ESCA (electron spectroscopy for chemical analysis) made on the membrane surface, no C-Cl bonding was detected, and therefrom it was presumed that the membrane surface had no oxidative degradation attributed to contact with halogen.

### <Example 6>

The operations were carried out under the same conditions as in Example 5, except that the commercially available phosphonic acid-based scale inhibitor, which was a phosphoric acid-based scale inhibitor, with a concentration of 1 mg/L was continuously dosed downstream from the pretreatment unit in place of the scale inhibitor not based on phosphoric acid. During the operations, the oxidation-reduction potential of pretreated water was kept at 350 mV or lower. And the oxidation-reduction potential of a concentrate of the reverse osmosis membrane was also kept at 350 mV or lower.

After the operations, the reverse osmosis membrane element put to use sustained a 10% reduction in fresh-water production amount and a 20% increase in differential pressure, and the obtained permeate was degraded so that a salt concentration thereof was increased by 1.1 times as compared to permeate obtained at the initial stage. The resulting reverse osmosis membrane element was disassembled, and cleaned with an acid and an alkali; as a result, its performance including fresh-water production amount and water quality of permeate were restored to the equivalents of its initial ones. Furthermore, according to ESCA (electron spectroscopy for chemical analysis) made on the membrane surface, no C-Cl bonding was detected, and therefrom it was presumed that the membrane surface had no oxidative degradation attributed to contact with halogen.

### <Comparative Example 1>

The operations were carried out under the same conditions as in Example 1, except that the commercially available phosphonic acid-based scale inhibitor with a concentration of 1 mg/L was continuously dosed at 30 minutes after sodium hydrogen sulfite with a concentration of 2 mg/L was dosed. During the operations, the oxidation-reduction potential of pretreated water was kept at 350 mV or lower. However, the oxidation-reduction potential of a concentrate of the reverse osmosis membrane often exceeded 350 mV. There was hence a possibility that the surface of the reverse osmosis membrane had come into an oxidized state.

After the operations, the reverse osmosis membrane element put to use sustained a 10% reduction in fresh-water production amount and a 10% increase in differential pressure, and the obtained permeate was degraded so that a salt concentration thereof was increased by 1.5 times as compared to permeate obtained at the initial stage. The resulting reverse osmosis membrane element was disassembled, and cleaned with an acid and an alkali; as a result, its performance including fresh-water production amount and water quality of permeate were restored to the equivalents of its initial ones. Furthermore, according to ESCA (electron spectroscopy for chemical analysis) made on the membrane surface, C-Cl bonding was observed. There was hence a possibility that the membrane surface had suffered oxidative degradation attributed to a chlorine-based oxidizing substance.

### <Comparative Example 2>

The operations were carried out under the same conditions as in Example 1, except that the commercially available phosphonic acid-based scale inhibitor with a concentration of 1 mg/L was continuously dosed at 2 minutes after sodium hydrogen sulfite with a concentration of 2 mg/L was dosed. During the operations, the oxidation-reduction potential of pretreated water was kept at 350 mV or lower. However, the oxidation-reduction potential of a concentrate of the reverse osmosis membrane exceeded 350 mV several times, and the oxidation-reduction potential of the collected concentrate of the reverse osmosis membrane gradually increased to above 350 mV. There was hence a possibility that the surface of the oxidation-reduction potential reverse osmosis membrane had come into an oxidized state.

After the operations, the reverse osmosis membrane element put to use sustained a 10% reduction in fresh-water production amount and a 12% increase in differential pressure, and the obtained permeate was degraded so that a salt concentration thereof was increased by 1.3 times as compared to permeate obtained at the initial stage. The resulting reverse osmosis membrane element was disassembled, and cleaned with an acid and an alkali; as a result, its performance including fresh-water production amount and water quality of permeate were restored to the equivalents of its initial ones. Furthermore, according to ESCA (electron spectroscopy for chemical analysis) made on the membrane surface, C-Cl bonding was observed. There was hence a possibility that the membrane surface had suffered oxidative degradation attributed to a chlorine-based oxidizing substance.

### <Comparative Example 3>

The operations were carried out under the same conditions as in Example 1, except that sodium hydrogen sulfite with a concentration of 2 mg/L was continuously dosed at 30 minutes after the commercially available phosphonic acid-based scale inhibitor with a concentration of 1 mg/L was dosed. During the operations, the oxidation-reduction potential of pretreated water was kept at 350 mV or lower. However, the oxidation-reduction potential of a concentrate of the reverse osmosis membrane exceeded 350 mV several times, and the oxidation-reduction potential of the collected concentrate of the reverse osmosis membrane gradually increased to above 350 mV. There was hence a possibility that the surface of the oxidation-reduction potential reverse osmosis membrane had come into an oxidized state.

After the operations, the reverse osmosis membrane element put to use sustained a 10% reduction in fresh-water production amount and a 12% increase in differential pressure, and the obtained permeate was degraded so that a salt concentration thereof was increased by 1.3 times as compared to permeate obtained at the initial stage. The resulting reverse osmosis membrane element was disassembled, and cleaned with an acid and an alkali; as a result, its performance including fresh-water production amount and water quality of permeate were restored to the equivalents of its initial ones. Furthermore, according to ESCA (electron spectroscopy for chemical analysis) made on the membrane surface, C-Cl bonding was observed. There was hence a possibility that the membrane surface had suffered oxidative degradation attributed to a chlorine-based oxidizing substance.

### DESCRIPTION OF REFERENCE NUMERALS AND SIGNS

- 1:: Raw water line
- 2:: Raw water tank
- 3:: Raw-water feed pump
- 4:: Pretreatment unit
- 5:: Intermediate tank
- 6:: Pretreated water feed pump
- 7:: Safety filter
- 8:: Booster pump
- 9, 9a and 9b:: Semipermeable membrane module
- 10:: Permeate
- 11:: Concentrate
- 12a, 12b, 12c, 12d and 12e:: Chemical injection tank (for scale inhibitor)
- 13a, 13b, 13c, 13d and 13e:: Chemical injection pump (for scale inhibitor)
- 14a, 14b, 14c, 14d and 14e:: Chemical injection tank (for reductant)
- 15a, 15b, 15c, 15d and 15e:: Chemical injection pump (for reductant)
- 16a and 16b:: Chlorine meter
- 17a, 17b, 17c, 17d, 17e and 17f:: Oxidation-reduction potential (ORP) meter
- 18a:: Chemical injection tank (for oxidant)
- 19a:: Chemical injection pump (for oxidant)

## Claims

1. A water treatment method comprising: feeding either raw water or pretreated water obtained by pretreating the raw water in a pretreatment step, as feed water, into a semipermeable membrane module by applying a pressure with a booster pump; and separating the feed water into a concentrate and a permeate,
wherein a scale inhibitor is dosed to the feed water within 0-10 seconds before or after a reductant is dosed to the feed water,
wherein the feed water contains a transition metal in an amount of 0.001 mg/L or larger, and
wherein the transition metal comprises at least one transition metal selected from among Fe(II/III), Mn(II), Mn(III), Mn(IV), Cu(I/II), Co(II/III), Ni(II), and Cr(II/III/IV/VI).

2. The water treatment method according to claim 1,
wherein the scale inhibitor has a reducing function.

3. The water treatment method according to claim 1 or 2, wherein the scale inhibitor comprises a phosphoric acid-based organic compound,
wherein in particular, the scale inhibitor comprises an ingredient which is at least one organic acid selected from among aminotris(methylenephosphonic acid), diethylenetriaminepenta(methylenephosphonic acid), hexaethylenediaminetetra(methylenephosphonic acid), ethylenediaminetetra(methylenephosphonic acid), 1-hydroxyethylene-1,1-diphosphonic acid, and tetramethylenediaminetetra(methylenephosphonic acid) or is a salt thereof and which has a molecular weight of 200-10,000 g/mol.

4. The water treatment method according to claim 3, wherein the scale inhibitor comprises, as an auxiliary ingredient, at least one compound selected from among polyphosphoric acid, phosphorous acid, phosphonic acid, phosphorus hydride, phosphine oxide, ascorbic acid, catechin, polyphenols, and gallic acid.

5. The water treatment method according to any one of claims 1 to 4, wherein the reductant is dosed to the feed water after an oxidant is dosed to the feed water and/or wherein the scale inhibitor is dosed to the feed water at 0-10 seconds before dosing the reductant to the feed water and/or
wherein the reductant and the scale inhibitor are simultaneously dosed to the feed water and/or
wherein the reductant comprises any of sodium hydrogen sulfite, sodium sulfite, sodium pyrosulfite, and sodium thiosulfate and/or
wherein the pretreatment step has a biotreatment function.

## Patentansprüche

1. Wasseraufbereitungsverfahren, umfassend: Zuführen von entweder Rohwasser oder vorbehandeltem Wasser, das durch Vorbehandlung des Rohwassers in einem Vorbehandlungsschritt erhalten wurde, als Speisewasser in ein semipermeables Membranmodul durch Anlegen eines Drucks mit einer Druckerhöhungspumpe; und Trennen des Speisewassers in ein Konzentrat und ein Permeat,
wobei ein Ablagerungsinhibitor zum Speisewasser innerhalb von 0 bis 10 Sekunden vor oder nach der Zugabe eines Reduktionsmittels zum Speisewasser zugegeben wird;
wobei das Speisewasser ein Übergangsmetall in einer Menge von 0,001 mg/l oder mehr enthält und
wobei das Übergangsmetall mindestens ein Übergangsmetall aufweist, ausgewählt aus Fe(II/III), Mn(II), Mn(III), Mn(IV), Cu(I/II), Co(II/III), Ni(II), und Cr(II/III/IV/VI).

2. Wasseraufbereitungsverfahren nach Anspruch 1,
wobei der Ablagerungsinhibitor eine reduzierende Funktion hat.

3. Wasseraufbereitungsverfahren nach Anspruch 1 oder 2, wobei der Ablagerungsinhibitor eine organische Verbindung auf Phosphorsäurebasis aufweist,
wobei insbesondere der Ablagerungsinhibitor einen Bestandteil aufweist, der mindestens eine organische Säure ist, ausgewählt aus Aminotris(methylenphosphonsäure), Diethylentriaminpenta(methylenphosphonsäure), Hexaethylendiamintetra(methylenphosphonsäure), Ethylendiamintetra(methylenphosphonsäure), 1-Hydroxyethylen-1, 1-diphosphonsäure, und Tetramethylendiamintetra(methylenphosphonsäure), oder ein Salz davon ist, und ein Molekulargewicht von 200-10.000 g/mol hat.

4. Wasseraufbereitungsverfahren nach Anspruch 3, wobei der Ablagerungsinhibitor als Hilfsbestandteil mindestens eine Verbindung aufweist, ausgewählt aus Polyphosphorsäure, Phosphorsäure, Phosphonsäure, Phosphorhydrid, Phosphinoxid, Ascorbinsäure, Catechin, Polyphenolen, und Gallussäure.

5. Wasseraufbereitungsverfahren nach einem der Ansprüche 1 bis 4, wobei das Reduktionsmittel zum Speisewasser zugegeben wird, nachdem ein Oxidationsmittel zum Speisewasser zugegeben wird, und/oder
wobei der Ablagerungsinhibitor zum Speisewasser 0 bis 10 Sekunden vor der Zugabe des Reduktionsmittels zum Speisewasser zugegeben wird, und/oder
wobei das Reduktionsmittel und der Ablagerungsinhibitor gleichzeitig zum Speisewasser zugegeben werden, und/oder
wobei das Reduktionsmittel ein beliebiges von Natriumhydrogensulfit, Natriumsulfit, Natriumpyrosulfit, und Natriumthiosulfat aufweist, und/oder
wobei der Vorbehandlungsschritt eine Biobehandlungsfunktion hat.

## Revendications

1. Procédé de traitement d'eau comprenant le fait : d'alimenter en eau brute ou en eau prétraitée obtenue par prétraitement de l'eau brute dans une étape de prétraitement, comme eau d'alimentation, un module de membrane semi-perméable par application d'une pression avec une pompe de suralimentation ; et de séparer l'eau d'alimentation en un concentré et un perméat,
dans lequel un agent antitartre est ajouté de façon dosée à l'eau d'alimentation dans les 0 à 10 secondes avant ou après l'ajout dosé d'un réducteur à l'eau d'alimentation,
dans lequel l'eau d'alimentation contient un métal de transition en une quantité supérieure ou égale à 0,001 mg/L, et
dans lequel le métal de transition comprend au moins un métal de transition choisi parmi Fe(II/III), Mn(II), Mn(III), Mn(IV), Cu(I/II), Co(II/III), Ni(II) et Cr(II/III/IV/VI).

2. Procédé de traitement d'eau selon la revendication 1,
dans lequel l'agent antitartre a une fonction de réduction.

3. Procédé de traitement d'eau selon la revendication 1 ou 2, dans lequel l'agent antitartre comprend un composé organique à base d'acide phosphorique,
dans lequel en particulier, l'agent antitartre comprend un ingrédient qui est au moins un acide organique choisi parmi l'acide aminotris(méthylènephosphonique), l'acide diéthylènetriaminepenta(méthylènephosphonique), l'acide hexaéthylènediaminetétra(méthylènephosphonique), l'acide éthylènediaminetétra(méthylènephosphonique), l'acide 1-hydroxyéthylène-1,1-diphosphonique, et l'acide tétraméthylènediaminetétra(méthylènephosphonique) ou est un sel de celui-ci et qui a un poids moléculaire compris entre 200 et 10000 g/mol.

4. Procédé de traitement d'eau selon la revendication 3, dans lequel l'agent antitartre comprend, comme ingrédient auxiliaire, au moins un composé choisi parmi l'acide polyphosphorique, l'acide phosphoreux, l'acide phosphonique, l'hydrure de phosphore, l'oxyde de phosphine, l'acide ascorbique, la catéchine, les polyphénols et l'acide gallique.

5. Procédé de traitement d'eau selon l'une quelconque des revendications 1 à 4, dans lequel le réducteur est ajouté de façon dosée à l'eau d'alimentation après l'ajout dosé d'un oxydant à l'eau d'alimentation et/ou
dans lequel l'agent antitartre est ajouté de façon dosée à l'eau d'alimentation 0 à 10 secondes avant d'ajouter de façon dosée le réducteur à l'eau d'alimentation et/ou
dans lequel le réducteur et l'agent antitartre sont ajoutés de façon dosée simultanément à l'eau d'alimentation et/ou
dans lequel le réducteur comprend l'un parmi l'hydrogénosulfite de sodium, le sulfite de sodium, le pyrosulfite de sodium et le thiosulfate de sodium et/ou
dans lequel l'étape de prétraitement a une fonction de traitement biologique.
